Europäisches Patentamt

(19) European Patent Office

Office européen des brevets

(11) Publication number: **0 170 109 B1**

# (12) EUROPEAN PATENT SPECIFICATION

(45) Date of publication of patent specification: **27.12.91**  (51) Int. Cl.⁵: **B29D 30/06, B29C 35/02**

(21) Application number: **85108416.0**

(22) Date of filing: **06.07.85**

(54) Improvements made to tyre-vulcanizing moulds.

(30) Priority: **01.08.84 IT 2216284**

(43) Date of publication of application:
**05.02.86 Bulletin 86/06**

(45) Publication of the grant of the patent:
**27.12.91 Bulletin 91/52**

(84) Designated Contracting States:
**AT DE FR GB**

(56) References cited:
**DE-A- 2 360 750**       **DE-C- 954 648**
**FR-A- 567 217**        **FR-A- 1 173 366**
**FR-A- 2 154 529**       **GB-A- 2 019 277**
**GB-A- 2 086 795**       **US-A- 1 987 908**
**US-A- 3 177 698**

**PATENT ABSTRACTS OF JAPAN, vol. 7, no. 9
(M-185)[1154], 14th January 1983; & JP-A-57
167 237 (KOBE SEIKOSHO K.K.) 15-10-1982**

(73) Proprietor: **PIRELLI COORDINAMENTO
PNEUMATICI Società per Azioni
Piazzale Cadorna, 5
I-20123 Milan(IT)**

(72) Inventor: **Pizzorno, Augusto
Via F. Chopin, 31
Milan(IT)**
Inventor: **Salvadori, Bruno
Via Fermi, 7
Cormano (Milan)(IT)**

(74) Representative: **Giannesi, Pier Giovanni et al
Pirelli S.p.A. Direzione Brevetti Piazzale
Cadorna, 5
I-20123 Milano(IT)**

## Description

The present invention refers to the improvements made in vulcanizing presses for tyres; said improvements being apt for facilitating and for speeding-up the operations for substituting the vulcanizing moulds with which said presses are provided.

As already known, a tyre-vulcanizing press comprises a frame provided with a lower supporting-plate - usually fixed with respect to the floor, which is apt for allowing a vulcanizing mould of the above-said tyres, to rest upon it, and an upper plate that is mobile with respect to the first plate and apt for keeping the mould shut during the vulcanizing-phase and for the shifting with respect to the said lower plate, for controlling the opening of the mould itself.

A well-known type of tyre-vulcanizing mould with which the press can be provided, (see for example GB-A-2.086.795) is the centripetal type of mould-with-sectors that substantially comprises a lower cheek - apt for being connected to said lower plate, an upper cheek - that is axially shiftable with respect to the other cheek and a circumferential crown-of-sectors fixed to said upper cheek - and hence, axially shiftable along with the same - but each of which is radially mobile with respect to said upper cheek when under the action of the force transmitted to it by a coupling made between the inclined surfaces made in the sector and on an annular element that holds said crown-of-sectors.

The movement of this type of mould requires, on the upper part of the press, not one but two reciprocally shiftable mobile plates - and precisely, an upper plate to which the said containing-ring for the sectors is fixed and an intermediate plate to which the upper cheek is fixed.

As for that matter is already known to those skilled in the art - apart from being amply illustrated with details in existing patent-literature and also later on in the present description, owing to the effect of the coupling between the said inclined surfaces, the relative axial shifting taking place between the two above-said plates, causes the radial shifting of the sectors with respect to the upper cheek.

Hence, the vulcanizing mould is connected to the fixed plate and to the two mobile plates - for the purpose of allowing an opening and a shutting correctly, during the functioning of the press; for this purpose, its lower cheek is connected to the fixed plate of the press, while the upper cheek and the annular element mentioned above, are connected respectively to the intermediate mobile plate and to the upper plate of the press. Screws, or suchlike threaded element, (see FR-A-2.154.529) are usually utilized for realizing said connection, and these latter are inserted into the holes made in the fixed and in the mobile plates of the press and tightened therein, in correspondence of the threaded holes of the cheeks and of the annular element of the mould, in accordance with those modalities which, for that matter, are already known to technicians.

Other connection means are also known of the so-called "undercut type" to fix the mould parts to the press frame: for example US-A-1987 908 discloses a tyre-vulcanizing press, comprising: a frame provided with a lower supporting plate apt for allowing one vulcanizing mould for said tyres to rest upon it, and an upper plate, the said mould comprising at least one lower cheek apt for being fixed to said lower plate, and an upper cheek apt for being connected to said upper plate, said press comprising connecting means-apt for fixing said lower cheek to said lower plate and said upper cheek to said upper plate, which comprise a series of bodies rotating upon said upper and lower plates, each one of which is provided with at least one projecting part that is made to cooperate with a corresponding shoulder made in said lower and upper cheeks, subsequent to the rotation of said body, in such away to relize an undercut-connection between said projecting part and said shoulder.

In the above-said briefly described type of vulcanizing presses, the operations that are necessary for substituting the mould, result as being long-drawn and tedious, with requiring special care and precaution. In fact, for being able remove the mould from the press - by raising it from the lower plate upon which it rests, it is first and foremost necessary to disconnect the various mould parts - both, from the lower plate itself, as well as from the upper plate. For carrying out these operations, it will first be necessary to dispose the press in its open position, and moreover, to avail of appropriate security measures against the press shutting again accidently - for thus having access - from the inside of the mould, to the screw-heads that serve for connecting the lower cheek to the lower plate. Then, successive to this, it will be necessary to dispose the mould in its shut configuration, to remove the screws that connect the upper cheek and annular element to the upper mobile plate - and finally, after having once again raised the mobile plates of the press, it will be necessary to grip hold of the mould, with appropriate means, for raising it and drawing it away from the fixed plate.

Moreover, the previously mentioned operations can be effectuated only after the mould has substantially attained a room-temperature - i.e. after a period of time that is sufficiently long enough for allowing the various mould and press parts to cool down, after the termination of the normal work-cycles; said period of time - which can take longer than necessary for carrying out the operations of dismantling the mould itself from the press, added to the period of time required successive to this - for returning the press back to the temperature of exercise, involves a considerable reduction in the output of the machines - especially when these latter are destined for producing a limited series of tyres.

Hence, it is evident that the operations necessary for substituting the mould in the described type of presses, prove to be rather difficult, with requiring particular precautions and the time - that is needed on the whole from the moment of interrupting the manufacturing of tyres on the press - until such time as the press itself can resume to manufacture a different type of tyre - results as being considerably lengthy.

The aim of this invention is to realize a vulcanizing-press for tyres of the type indicated - by means of which the drawbacks that were previously mentioned can be eliminated and, in particular, the operation for substituting the vulcanizing-moulds, can be effectuated in a simple way - and within a much lesser period of time.

On the basis of this invention, there is realized a tyre-vulcanizing press,comprising:a frame provided with a lower supporting plate apt for allowing one vulcanizing mould for said tyres to rest upon it, and an upper plate, mobile with respect to said lower plate, that is apt for keeping said mould shut during the vulcanizing phase and for shifting it with respect to said lower plate-for controlling the opening and shutting of the mould,the said mould comprising at least one lower cheek apt for being fixed to said lower plate ,and an upper cheek (16) that is mobile with respect to said lower cheek and apt for being connected to said mobile plate,said press comprising connecting means-apt for fixing said lower cheek to said fixed plate and said upper cheek to said mobile plate, which comprise a series of bodies rotating upon said fixed and mobile plates ,each one of which is provided with at least one projecting part that is made to cooperate with a corresponding shoulder made in said lower and upper cheeks ,subsequent to the rotation of said body ,in such a way to relize an undercut-connection between said projecting part and said shoulder, wherein said series of bodies comprise a plurality of shafts rotatable around holes of said fixed and mobile plates ,each one of which is provided with a head apt for being inserted into a corresponding perforation of said lower and upper cheeks and cooperating with a shoulder made in correspondence of said perforation ,said connection means being actionable outside of said fixed and mobile plates,said shafts being rotated for the purpose of dismantling the mould from the press when the press is shut.

Quite conveniently, said undercut-connection can be realized by means of having corresponding helix-shaped reciprocally facing surfaces.

The above-said connecting means conveniently comprise: a plurality of shafts, rotatable around their own axis, each of said shafts being provided with a head apt for being inserted into a corresponding perforation in said lower and upper cheeks and apt for cooperating with a shoulder made in correspondence of said perforations, each of said shafts being mechanically connected to other shafts through a transmission that allows for transmitting the rotation of one shaft to the others and at least one of these being provided with an actioning means apt for controlling the rotation.

For having a better comprehending the device of this invention, there will now be given, solely by way on non-limiting example, a more detailed description - with also referring to the to the FIGURES of the attached drawings, whereby:-

FIG. 1 - shows a partial vertical-section of a vulcanizing press - according to the present invention, fitted with a centripetal type of mould, in its shut configuration.

FIG. 2a - shows a detail of the connecting means - in a blocking position, with which the press of FIG. 1 is provided, as along the cutting plane A-A.

FIG. 2b - shows a detail of the same connecting means of FIG. 2a, according to the cutting plane B-B.

FIG. 3 - shows a section of the press in FIG. 1, in an open configuration.

FIG. 4 - shows a section of the press, according to the invention, in a configuration whereby its upper plate is separated from the vulcanizing mould - and this latter is ready for being removed from the press itself.

With reference to the figures in the drawings, the vulcanizing press of the invention, substantially comprises: a frame of which forms part a plate 1 - that is fixed with respect to the floor; said plate being substantially apt for defining a resting plane for the vulcanizing mould - indicated in its entire by the numeral 2; to said fixed plate 1 there can be connected another heating plate 3, in which opportune chambers 4 are made for the vapour, and which are thermically insulated with respect to the above said fixed plate, by means of layers 5 - made from a suitable thermically insulating material.

On the frame of the press, there is a second mobile plate 6, which is controlled by a kinematic motion (not shown) of any whatsoever suitable type. To said mobile plate there is connected - in an axially mobile way with respect to it - a third plate 7, to which there is fixed a heating element 8, provided with a vapour-chamber 9, which rests upon the plate itself, with the interpositioning of the layers 10 - made from a suitable, thermically insulating material.

The axial shifting of the plate 7 with respect to the plate 6 is controlled by suitable actioning means (not shown) and guided by appropriate shafts 13, each one of which is screwed into the plate 7 and made slidable inside an axial hole of the mobile plate 6 and with each shaft presenting a culminating head 14 - apt for acting as a stroke-end stop, in the relative movement between the two plates 7 and 6.

The centripetal type mould 2 - that is apt for being interposed between the fixed plate 1 and the mobile plate 6, substantially comprises: a lower cheek 15, apt for being connected (the mode to be explained further on) to the fixed plate 1, an upper cheek 16, disposed opposite to the previous one and fixed to said plate 7 and also connected to the mobile plate 6, as well as a plurality of sectors 17, circumferentially disposed around said upper cheek, each one of which is radially mobile with respect to the previously mentioned cheeks. For realizing said movement of the sectors with respect to the cheeks and also for controlling the relative shifting, prismatic guides 18 are predisposed for allowing the shifting of the sector itself to take place with respect to the upper cheek 16, and also a coupling 19 - between the corresponding inclined surfaces made both, on the sector itself, as well as on the radially inner surface of an annular element 20 connected (the mode to be explained further on) to the mobile plate 6 of the press.

For convenience sake, inside each sector 17, cavities 21 are made for the circulation of the heating-fluid, said cavities being apt for being connected with an appropriate source of said fluid, usually a vapour.

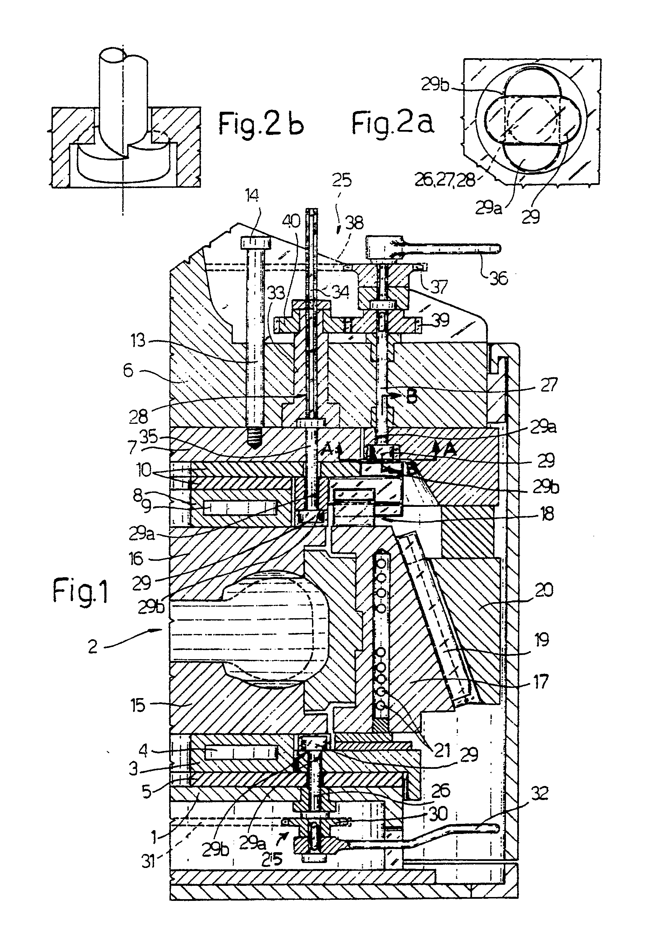

On the basis of the invention, the connection of the various parts of the mould 2 and of the annular element 20 - to the fixed plate 1, to the mobile plate 6 and to the third plate 7, is realized by such means as those comprising a series of bodies that are rotable on the above-said plates and actionable from the outside of the plates themselves. As regards said mould, these elements have been indicated, in their complex whole, by the numeral 25. The above-said connecting-means - comprising substantially three series of shafts that are rotatable around their own axis, are indicated by the numerals 26, 27 and 28 respectively. The rotatable shafts 26 of the first series, are rotatable inside holes made in the fixed plate 1. Moreover, each one of these shafts presents a culminating head 29 - for example: having a prismatic elliptical form, (FIG. 2a), which is apt for being inserted into a perforation 29a endowed with a corresponding shape, that is made in the lower cheek 15 - for so consenting it to cooperate with a corresponding shoulder 29b, made in the proximity of the perforation itself - as has been shown in FIGS. 1 and 2. Each of said shafts can conveniently be provided with a toothed-wheel 30 made solidal with it, and the shafts of said first series can be connected to one another through a chain drive transmission 31. Moreover, one of the shafts themselves can be provided with an opportune actioning means - for example: a lever 32, that is apt for controlling the rotation that is transmitted to the other shafts of the series - through the chain 31.

The shafts of the second series 27 are rotatable on the mobile plates 6 that present a culminating head 29 as well, which is apt for being inserted into a corresponding perforation 29a, made in the annular element 20. Each of these heads, that have a similar form to that of the shaft-heads of the first series, consents for cooperating with a corresponding shoulder 29b, made in the proximity of each of the previously mentioned perforations that are present in the annular element 20.

The shafts of the third series - which are necessary when the press is fitted with the centripetal type of moulds, are rotatable on the mobile plate 6 and they are also axially shiftable with respect to it. For this purpose, each shaft is axially slidable in a bush 33 mounted on plate 6; said shaft comprises: a first tract 34 that is axially slidable inside said bush, and a second tract 37 - that is lodged, in a rotatable manner, inside a hole made in plate 7. In correspondence of the extremity of the second tract 35, there is made a prismatic head 29 (similar to the previous one), that is apt for being inserted into a corresponding perforation 29a made in the upper cheek 16 of the mould 2 and also for cooperating with a shoulder 29b made in the proximity or the perforation itself - as has been clearly shown in FIG. 1.

The blocking - between the supporting plates and the elements connected to it, takes place because the prismatic shaft-heads 29 have an elliptical form; whereas the corresponding perforations - in the cheeks and in the annular elements, are constituted by circular chambers - having a greater diameter than the maximum diameter of the elliptical heads, which are accessible through an opening of an elliptical section with a slightly larger diameter than that of the corresponding head.

It is clear that a rotation of the shafts around their own axis, takes each head, from a possible sliding-position, through the aperture of the corresponding circular chamber (by the coincidence of the axes of the two ellipses), to a rotated position with respect to the previous one, whereby said sliding is not possible - since it results as being blocked by the shoulder comprised by the interference - between the elliptical heads and the circular chamber walls, created by the non-coincidence between the axes of the two ellipses.

Hence, in such a manner there is determined the blocking - or, as an alternative, the releasing between the cheeks of the annular element and the corresponding supporting plates.

A further advantageous provision consists in realizing corresponding reciprocally facing, surfaces of the circular chamber and of the elliptical head, from the part that issues forth in correspondence of the shaft, not perpendicular to the axis of said shaft but inclined with respect to it - or rather, helix-shaped (as clearly illustrated in FIG. 2b), with the axis of the helix and the shaft being the same.

It results as being clear that, by adopting this provision, the rotation of the elliptical head - in the corresponding chamber - as effectuated through the rotation of the shaft, not only causes the blocking of the cheeks and of the ring on the corresponding plates, but also a shrinkage between the two elements - whose values can be varied, within determined limits, by means of varying the angle of rotation of the shaft, or the inclinaton of the coupled helicoidal surfaces.

Amongst the advantages had through said shrinkage, there is obviously that of annulling the effect of all the existing clearances at play between the coupled elements (clearances that are per se necessary for facilitating the mounting and dismantling of the mould from the press) - with hence, guaranteeing the correct functioning and a longer service-life for the machinery - and with moreover, reducing the need and the entity of the maintenance operations.

Still conveniently, at least one shaft in the second series 27, is provided with an actioning means - for example: the lever 36, and to each shaft of said series, there is connected a toothed-wheel 37 - upon which there is disposed a chain 38 which is apt for transmitting the motion from one of said shafts to the other shafts of the series. On each shaft 27 of the second series, it is later tallied with a toothed-wheel 39, meshed with a corresponding toothed-wheels 40 made solid with the torsion - directly or through the means of a bush 33, with a shaft 26 of the third series.

The functioning of the described press takes place in the following manner.

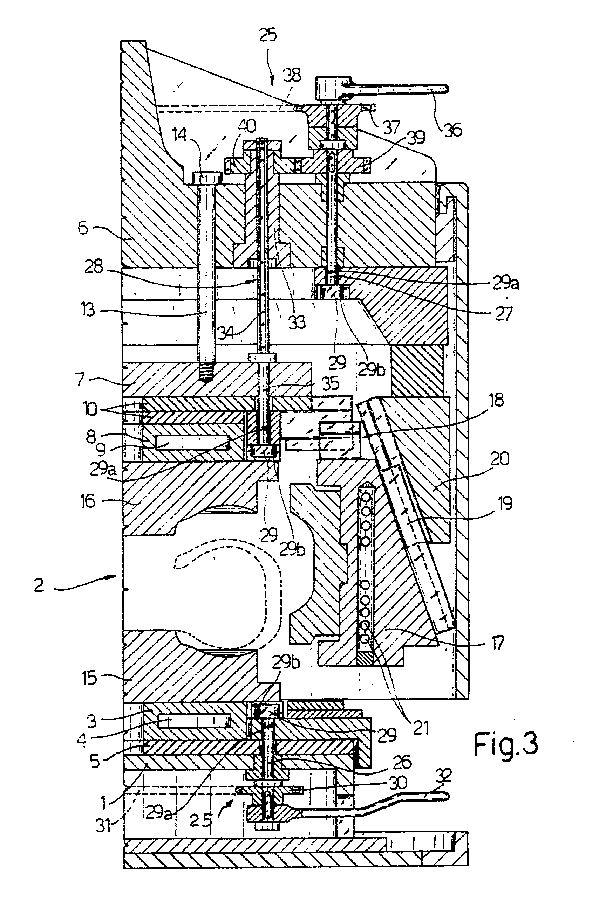

When the mould is mounted on the press, each of the prismatic heads 29 are found disposed in the configuration shown in FIGS. 1 and 2 - whereby the press cooperates with a corresponding shoulder 29b made in the proximity of the perforations 29a that are foreseen on the annular element 20 and on the lower and upper cheeks, respectively 15 and 16. In this manner the heads 29 of the shafts 26 - of the first series, rigidly connect the lower cheek 15 to the corresponding fixed plate 1 of the press, while the prismatic heads of the shafts 27 and 28 - of the second and third series respectively, rigidly connect the annular element 20 to the mobile plate 6, and the upper cheek 16 to the third plate 7 of the press. When the press is brought to its open configuration (shown in FIG. 3), subsequent to the raising of the mobile plate 6, firstly the radial shifting of the sectors 17 are controlled; this is obtained through the effect of the relative axial movement between the second plate 6 and the third plate 7, owing to the pressures transmitted during the coupling between the inclined surfaces 19, which apply a force to the relative sector 17, whose radial component determines the radial movement towards the outside of the sector itself that is guided during said movement by the guides 18.

During said phase of opening the mould, the mobile plate 6 separates from the plate 7, in the manner shown in FIG. 3; said relative shifting can take place - because the first tract 34, of each shaft 27 of said second series, can slide inside the relative bush 33 and, similarly, each shaft 13 can slide inside the relative hole made in mobile plate 6.

Whenever the mobile plate 6 has reached the stroke-end stop with respect to the plate 7 - i.e. against the ledge-head 14 of shaft 13, the further movement of the plate 6 causes the upper cheek to be raised - and with it the raising of the crown-of-sectors 17, with respect to the lower cheek 15, thus determining (see FIG. 3) the complete opening of the mould.

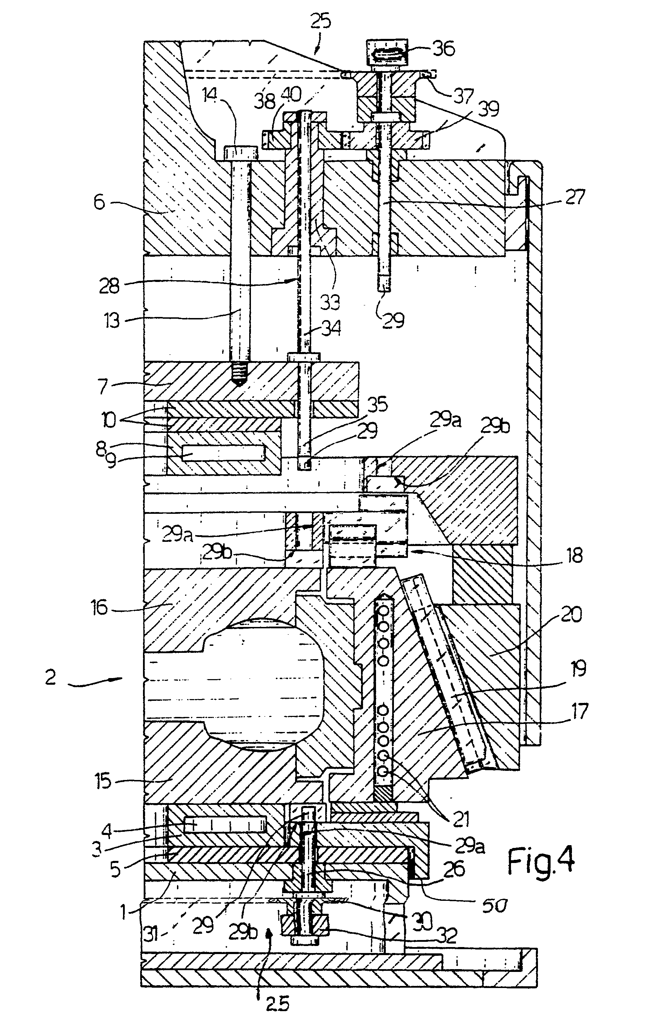

When the mould 2 has to be dismantled from the press, for the purpose of being substituted with a different mould, it is unnecessary to wait for the press and the mould to first cool down substantialy to room temperature, but the operation of substituting the mould can be started immediately after the termination of the last operative cycle done on the press. For proceeding with said substitution, after having extracted the last vulcanized tyre and shut the mould, it is enough for the actioning-levers 32 and 36 to be operated for determining the rotation of the relative shafts 26 and 27, to which the levers are connected; the rotation of these shafts is transmitted - through the chains 31 and 38 and through the pairs of toothed-wheels 39 and 40, to the other shafts of the same series and to the shafts 28 of the third series. In this way the prismatic heads 29 of each shaft are brought to a configuration whereby they are substantiallly disengaged from the relative shoulders 29b and can pass through the relative perforations 29a made in the annular element 20 and in the lower and upper cheeks 15 and 16 respectively, if any relative axial movement of the shafts themselves, is determined with respect to said parts. Therefore, when the mobile plate 6 of the press is raised (as shown in FIG. 4) the heads 29, of the shafts 27 and 28 of the second and the third series, become dis-engaged from the relative perforations 29a - made in the annular element 20 and in the upper cheek 16 - and hence, the plates 6 and 7 can be completely separated from the mould, which remains resting solely upon the fixed plate 1 (as is shown in FIG. 4). At this point, the mould can be raised from the plate itself, by gripping it, in any whatsoever appropriate way - such as, for example: through a device comprising a plurality of hooks (not shown) which are apt for being inserted underneath the lower cheek 15 - and precisely, in correspondence of the end-limit ledge 50.

When the new mould is made to rest upon the fixed plate 1, by means of fixing it down, it is sufficient to lower the mobile plate 6 of the press and to repeat, in the inverse sense, the previously described operations.

Hence, it results as being evident that the operation of substituting the moulds on the press or our invention can be effectuated with considerable simplicity and speed. Moreover, during the course of the operations required for substituting said moulds, it is unnecessary to have ready any device for taking precautions against any risks that could be derived from an accidental lowering of the second plate 6 and/or of the third plate 7.

In particular, even though the vulcanizing-press having the form of realization shown and described, should comprise a mould of the centripetal type - provided with a lower cheek, an upper cheek and a series of sectors, the invention can also be applied to presses that are equipped with moulds made of two-halves - hence, comprising solely a pair of cheeks of which the lower one is fixed and the upper one is mobile, which are apt for defining the tyre cavity, or else moulds with sectors of a diverse type to that described. In this case, there is no need for having any relative shifting between the plates 6 and 7 - so much so that the connecting means 25 described, only comprise two series of rotatable shafts - completely corresponding with those of the first series of shafts 26 and the third series of shafts 28 - owing exclusively to the blocking of the two cheeks.

## Claims

1. Tyre-vulcanizing press,comprising:a frame provided with a lower supporting plate (1) apt for allowing one vulcanizing mould(2) for said tyres to rest upon it, and an upper plate (6)- ,mobile with respect to said lower plate, that is apt for keeping said mould shut during the vulcanizing phase and for shifting it with respect to said lower plate-for controlling the opening and shutting of the mould,the said mould comprising at least one lower cheek (15) apt for being fixed to said lower plate ,and an upper cheek (16) that is mobile with respect to said lower cheek and apt for being connected to said mobile plate,said press comprising connecting means-apt for fixing said lower cheek to said fixed plate and said upper cheek to said mobile plate, which comprise a series of bodies (26,28) rotating upon said fixed and mobile plates ,each one of which is provided with at least one projecting part (29) that is made to cooperate with a corresponding shoulder (29b) made in said lower and upper cheeks ,subsequent to the rotation of said body ,in such a way to realize an undercut-connection between said projecting part and said shoulder , wherein said series of bodies comprise a plurality of shafts rotatable around holes of said fixed and mobile plates ,each one of which is provided with a head apt for being inserted into a corresponding perforation of said lower and upper cheeks and cooperating with a shoulder made in correspondence of said perforation ,said connection means being actionable outside of said fixed and mobile plates,said shafts being rotated for the purpose of dismantling the mould from the press when the press is shut.

2. Press, according to CLAIM 1, whereby said mould comprises a series of sectors (17), each one of which is mobile radially - with respect to said upper cheek, under the action of the force transmitted to it by a coupling between the inclined surface made in said sector and on an annular element (20) fixed to said mobile plate, characterized by the fact that said connecting means are also apt for connecting said annular element to said mobile plate and that they comprise a further series of rotatable bodies (27) on said mobile plate - that are actionable from the outside of said mobile plate, each one of which is provided with a projecting part (29) apt for being made to cooperate with a corresponding shoulder (29b), made on said annular element, subsequent to the rotation of said body, in such a way as to realize an undercut-connection between said projecting part and said shoulder.

3. Press, according to CLAIMS 1 or 2, characterized by the fact that said connecting means comprise a plurality of rotatable shafts, each one of which is provided with a head apt for being inserted into a corresponding perforation of said lower and upper cheeks and in said annular element and cooperating with a shoulder made in correspondence of said perforation, each one of said shafts being apt for mechanically connected with other shafts - through a transmission that allows for transmitting the rotation from one of them to the others, and at least one of them being provided with actioning means apt for controlling their rotation.

4. Press, according to CLAIM 1 or 2, characterized by the fact that said connecting means comprise three series of said shafts, the shafts of a first series being rotatable upon said mobile plate and the relative heads are apt for being inserted into perforations in said annular element, the shafts of a second series are apt for being inserted into perforations of said upper cheek, said shafts of said first series being connected to each other through a chain transmission (38), and with the shafts of said second sees through pairs of toothed-wheels (39, 40), and the shafts of a third series being rotatable upon said fixed plate and the relative heads are apt for being inserted into the perforations of said lower cheek.

5. Press, according to CLAIM 1 or 2, characterized by the fact that the heads (29) of said shafts have a prismatic elliptical form and that the corresponding perforations of said cheeks and said annular element, are circular chambers provided with an opening having an elliptical section that corresponds to that of said heads.

6. Press, according to CLAIM 5, characterized by the fact that said prismatic elliptical heads present their surface turned towards said shaft that is obliquely inclined with respect to axis of said shaft and that the surface of said circular chamber, that faces said inclined surface, presents the same inclination as the latter.

7. Press, according to CLAIM 6, characterized by the fact that said facing surfaces are helix-shaped, with the axis of said helix being coincident with the axis of said shaft.

8. Press, according to CLAIM 3, characterized by the fact that said actioning means comprise a lever (32, 36), made to rotate solidally with said shaft.

**Revendications**

1. Presse de vulcanisation de pneumatiques, comprenant un bâti pourvu d'un plateau de support inférieur (1) adapté pour supporter un moule de vulcanisation (2) de pneumatiques, et un plateau supérieur (6) mobile par rapport audit plateau inférieur, et qui est adapté pour maintenir ledit moule fermé pendant la phase de vulcanisation et pour être déplacé par rapport audit plateau inférieur afin de commander l'ouverture et la fermeture du moule, ce moule comprenant au moins une partie inférieure (15) apte à être fixée sur le plateau inférieur, et une partie supérieure (16) qui est mobile par rapport à ladite partie inférieure et adaptée pour être reliée audit plateau mobile, la presse comprenant des moyens de liaison pour fixer ladite partie inférieure audit plateau fixe, et ladite partie supérieure audit plateau mobile, ces moyens comprenant une série d'organes (26-28), tournant sur lesdits plateaux fixe et mobile, chacun desdits organes comportant au moins une partie en saillie (29) qui est adaptée pour coopérer avec un épaulement correspondant (29b) prévu dans lesdites parties inférieure et supérieure, consécutivement à la rotaion dudit organe, de manière à réaliser une liaison à cavité entre ladite partie en saillie et ledit épaulement, dans laquelle lesdites séries d'organes comprennent plusieurs arbres pouvant tourner dans des trous desdits plateaux fixe et mobile et chaque arbre comportant une tête adaptée pour être insérée dans un trou correspondant desdites parties inférieure et supérieure et pour coopérer avec un épaulement prévu de manière à correspondre avec ledit trou, lesdits moyens de liaison étant adaptés pour être actionnés de l'extérieur des plateaux fixe et mobile, lesdits arbres étant entraînés en rotation afin de démonter le moule de la presse lorsque cette dernière est fermée.

2. Presse suivant la revendication 1, dans laquelle ledit moule comprend une série de segments (17) dont chacun est mobile radialement par rapport à ladite partie supérieure, sous l'action d'une force qui lui est transmise par un couplage entre une surface inclinée formée dans ledit segment et sur un organe annulaire (20) fixé sur ladite surface mobile, caractérisé par le fait que lesdits moyens de liaison sont également adaptés pour relier ledit organe annulaire audit plateau mobile et en ce qu'il comprennent une autre série d'organes rotatifs (27) sur ledit plateau mobile, qui peuvent être actionnés depuis l'extérieur du plateau mobile, et dont chacun comporte une partie en saillie (29) adaptée pour coopérer avec un épaulement correspondant (29b) prévu sur ledit organe annulaire consécutivement à la rotation dudit organe rotatif, de manière à réaliser une liaison à cavité entre ladite partie en saillie et ledit épaulement.

3. Presse suivant les revendications 1 ou 2, caractérisée par le fait que lesdits moyens de liaison comprennent plusieurs arbres rotatifs, dont chacun comporte une tête apte à être insérée dans un trou correspondant desdites parties inférieure et supérieure et dans ledit organe annulaire et coopérant avec un épaulement prévu de façon à correspondre audit trou, chacun desdits arbres étant apte à être relié mécaniquement à d'autres arbres par l'intermédiaire d'une transmission qui permet de transmettre aux autres la rotation de l'un d'entre-eux, et au moins l'un d'entre-eux comportant des moyens d'actionnement aptes à commander leur rotation.

4. Presse suivant la revendication 1 ou 2, caractérisée par le fait que lesdits moyens de liaison comprennent trois séries desdits arbres, les arbres d'une première série étant rotatifs sur ledit plateau mobile et les têtes desdits arbres étant aptes à être insérées dans des trous prévus dans ledit organe annulaire, les arbres d'une seconde série étant aptes à être insérés dans des trous de ladite partie supérieure, lesdits arbres de la première série étant reliés les uns aux autres par l'intermédiaire d'une chaîne de transmission (38), et aux arbres de la seconde série par l'intermédiaire de paires de roues dentées (39,40), et les arbres d'une troisième série pouvant être entraînés en rotation sur ledit plateau fixe et les têtes relatives étant aptes à être insérées dans les trous de ladite partie inférieure.

5. Presse suivant la revendication 1 ou 2, caractérisée par le fait que les têtes (29) des arbres ont une forme elliptique prismatique et en ce que les trous correspondants desdites parties et de l'organe annulaire sont des chambres circulaires pourvues d'une ouverture ayant une section elliptique qui correspond à celle desdites têtes.

6. Presse suivant la revendication 5, caractérisée par le fait que lesdites têtes elliptiques prismatiques ont leur surface tournée vers ledit arbre inclinée obliquement par rapport à l'axe de l'arbre, et en ce que la surface de ladite chambre circulaire qui est orientée vers ladite surface inclinée présente la même inclinaison que cette dernière.

7. Presse suivant la revendication 6, caractérisée par le fait que lesdites surfaces qui sont dirigées l'une vers l'autre ont la forme d'une hélice, l'axe de ladite hélice coincidant avec l'axe de l'arbre.

8. Presse suivant la revendication 3, caractérisée par le fait que ledit organe d'actionnement comprend un levier (32,36) adapté pour tourner solidairement avec ledit arbre.

**Patentansprüche**

1. Reifenvulkanisierpresse, umfassend: ein Gestell, welches mit einer unteren Tragplatte (1), auf welcher eine Vulkanisierform (2) für die Reifen liegen kann, und mit einer oberen Platte (6) versehen ist, die mit Bezug auf die untere Platte beweglich ist und die Form während der Vulkanisierphase geschlossen halten kann sowie mit Bezug auf die untere Platte verschiebbar ist zum Steuern des Öffnens und des Schließens der Form, wobei die Form wenigstens eine untere Backe (15), die an der unteren Platte befestigt werden kann, und eine obere Backe (16) umfaßt, die mit Bezug auf die untere Backe bewegbar ist und mit der beweglichen Platte verbindbar ist, und die Presse eine Verbindungseinrichtung umfaßt zum befestigen der unteren Backe an der ortsfesten Platte und der oberen Backe an der beweglichen Platte, wobei diese Einrichtung eine Reihe von Körpern (26,28) umfaßt, die sich an der ortsfesten und der beweglichen Platte drehen und von denen jeder mit wenigstens einem vorragenden Teil (29) versehen ist, der nach der Drehung des Körpers mit einer entsprechenden Schulter (29b), die in der unteren und in der oberen Backe gebildet ist, zusammenarbeiten kann derart, daß eine Hintergreifverbindung zwischen dem vorragenden Teil und der Schulter verwirklicht ist, wobei die Reihe von Körpern eine Mehrzahl von Schäften umfaßt, die rund um Löcher der ortsfesten und der beweglichen Platte drehbar sind und von denen jeder mit einem Kopf versehen ist, der in ein entsprechendes Loch der unteren und der oberen Backe eingesetzt werden kann und mit einer Schulter zusammenarbeitet, die in Entsprechung zu dem Loch gebildet ist, wobei die Verbindungseinrichtung von der Außenseite der ortsfesten und der bewegbaren Platte betätigbar ist und die Schäfte gedreht werden zu dem Zweck, die Form von der Presse abzunehmen, wenn die Presse geschlossen ist.

2. Presse nach Anspruch 1, wobei die Form eine Reihe von Segmenten (17) umfaßt, deren jedes mit Bezug auf die obere Backe radial bewegbar ist unter der Wirkung einer Kraft, die an das Segment durch eine Kopplung zwischen einer schrägen Fläche an dem Segment und einer schrägen Fläche an einem ringförmigen Element (20), welches an der beweglichen Platte befestigt ist angelegt wird, dadurch gekennzeichnet, daß die Verbindungseinrichtung weiterhin dazu dient, das ringförmige Element mit der beweglichen Platte zu verbinden, und daß diese Einrichtung eine weitere Reihe von drehbaren Körpern (27) an der beweglichen Platte aufweist, die von der Außenseite der beweglichen Platte betätigbar sind und deren jeder mit einem vorragenden Teil (29) versehen ist, der nach der Drehung des Körpers mit einer an dem ringförmigen Element gebildeten entsprechenden Schulter (29b) zusammenarbeiten kann derart, daß eine Hintergreifverbindung zwischen den vorragenden Teil und der Schulter verwirklicht ist.

3. Presse nach Anspruch 1 oder 2, dadurch gekennzeichnet, daß die Verbindungseinrichtung eine Mehrzahl von drehbaren Schäften aufweist, deren jeder mit einem Kopf versehen ist, der in ein entsprechendes Loch der unteren und der oberen Backe und in dem ringförmigen Element eingesetzt werden kann und mit einer Schulter zusammenarbeitet, die in Entsprechung des Loches gebildet ist, wobei jeder der Schäfte mit anderen Schäften mechanisch verbunden werden kann über eine Kraftübertragung, die es ermöglicht, die Drehung von einem der Schäfte auf die anderen Schäfte zu übertragen, und wobei wenigstens einer von ihnen mit einer Betätigungeinrichtung versehen ist zum Steuern der Drehung der Schäfte.

4. Presse nach Anspruch 1 oder 2, dadurch gekennzeichnet, daß die Verbindungseinrichtung drei Reihen von Schäften aufweist, von denen die Schäfte einer ersten Reihe an der beweglichen Platte drehbar sind und die zugehörigen Köpfe in Löcher in dem ringförmigen Element eingesetzt werden können, die Schäfte einer zweiten Reihe in Löcher der oberen Backe eingesetzt werden können, wobei die Schäfte der ersten Reihe über eine Kettenkraftübertragung (38) und die Schäfte der zweiten Reihe über Paare von Zahnrädern (39) miteinander verbunden sind und die Schäfte einer dritten Reihe an der ortsfesten Platte drehbar sind und die zugehörigen Köpfe in die Löcher der unteren Backe eingesetzt werden können.

5. Presse nach Anspruch 1 oder 2, dadurch gekennzeichnet, daß die Köpfe (29) der Schäfte prismatische elliptische Form haben und daß die entsprechenden Löcher der Backen und des ringförmigen Elementes kreisförmige Kammern sind, die mit einer Öffnung versehen sind, welche einen elliptische Querschnitt hat, der demjenigen der Köpfe entspricht.

6. Presse nach Anspruch 5, dadurch gekennzeichnet, daß die in Richtung gegen den Schaft gewandte Fläche der prismatischen elliptischen Köpfe mit Bezug auf die Achse des Schaftes schräg gebildet ist, und daß die Fläche der kreisförmigen Kammer, die der schrägen Fläche zugewandt ist, die gleiche Schräglage oder Neigung wie letztere hat.

7. Presse nach Anspruch 6, dadurch gekennzeichnet, daß die zugewandten Flächen schraubenlinienförmig gebildet sind, wobei die Achse der Wendel mit der Achse des Schaftes übereinstimmt.

8. Presse nach Anspruch 3, dadurch gekennzeichnet, daß die Betätigungseinrichtung einen Hebel (32,36) aufweist, der sich mit dem Schaft gemeinsam dreht.

9

Fig.2b

Fig.2a

Fig.1

Fig.3

Fig.4